# FASCICULE DE BREVET EUROPEEN

(11) **EP 1 875 104 B1**
(45) Date de publication et mention de la délivrance du brevet: **08.09.2010**
(21) Numéro de dépôt: 06743832.5
(22) Date de dépôt: 24.04.2006
(51) Int. Cl.: F16H 3/72, F16H 61/00

(54) **DISPOSITIF DE TRANSMISSION DE PUISSANCE D'UN VEHICULE AUTOMOBILE MUNI D'UN MECANISME A ROUES LIBRES ENTRAINANT UNE POMPE A HUILE**
LEISTUNGSÜBERTRAGUNGSVORRICHTUNG FÜR EIN MIT EINEM FREILAUFANTRIEB, DER EINE ÖLPUMPE ANTREIBT, AUSGESTATTETEN KRAFTFAHRZEUG
POWER TRANSMISSION DEVICE FOR A MOTOR VEHICLE WHICH IS EQUIPPED WITH A FREE WHEEL MECHANISM THAT DRIVES AN OIL PUMP

(30) Priorité: 26.04.2005 FR 0551072
(43) Date de publication de la demande: 09.01.2008
(73) Titulaire: Peugeot Citroën Automobiles Société Anonyme, 78140 Velizy Villacoublay (FR)
(72) Inventeur: BOUTOU, Thomas, F-75013 Paris (FR); BELMONT, Serge, F-92100 Boulogne-Billancourt (FR); BOURY, Olivier, F-92000 Nanterre (FR)
(86) Numéro de dépôt international: PCT/FR2006/050375
(87) Numéro de publication internationale: WO 2006/114542

(56) Documents cités:
- EP-A- 0 821 187
- EP-A- 1 197 371
- DE-A1- 19 923 154
- US-A- 5 799 744
- US-A- 5 823 282
- US-B2- 6 863 140
- PATENT ABSTRACTS OF JAPAN vol. 1997, no. 04, 30 avril 1997 (1997-04-30) -& JP 08 324262 A (AQUEOUS RES:KK; AISIN AW CO LTD), 10 décembre 1996 (1996-12-10)
- PATENT ABSTRACTS OF JAPAN vol. 2003, no. 12, 5 décembre 2003 (2003-12-05) & JP 2004 100725 A (NISSAN MOTOR CO LTD), 2 avril 2004 (2004-04-02)

## Description

La présente invention concerne un dispositif de transmission de puissance d'un véhicule automobile muni d'un mécanisme à roues libres entraînant une pompe à huile. L'invention a notamment pour but de limiter au maximum des frottements entre des pièces mécaniques du dispositif de transmission. L'invention trouve une application particulièrement avantageuse dans le domaine des véhicules automobiles à motorisation hybride, mais elle pourrait aussi être utilisée avec d'autres types de véhicules terrestres à motorisation hybride.

On connaît des dispositifs de transmission pour véhicules hybrides qui comportent un moteur thermique, deux machines électriques, et un, deux, ou plusieurs trains épicycloïdaux reliés entre eux à l'intérieur d'un ensemble mécanique. Un exemple d'un tel dispositif est décrit dans la demande de brevet français FR-A-2832357. Avec ces dispositifs de transmission, la puissance du moteur thermique peut être soit transmise directement aux roues, soit dérivée en passant par une chaîne électrique.

La chaîne électrique comporte les machines électriques susceptibles de se comporter en moteur ou en générateur selon des valeurs d'énergies reçues électriquement et ou mécaniquement respectivement sur leurs bornes et leur arbre. La puissance dérivée est retransmise aux roues du véhicule ou stockée le cas échéant dans un système de stockage. Cette puissance dérivée permet d'adapter précisément le couple appliqué aux roues du véhicule à celui demandé par un conducteur, tout en adaptant également précisément les couple et régime du moteur thermique de façon à optimiser son rendement. Cette adaptation du couple appliqué aux roues procure un meilleur confort de conduite, tandis que l'adaptation du point de fonctionnement du moteur thermique permet une économie d'énergie.

Lorsqu'un système de stockage, tel qu'une batterie, lui est relié, un tel dispositif est susceptible de fonctionner dans deux modes de fonctionnement. En effet, dans un premier mode de fonctionnement appelé mode hybride, l'arbre de roues est entraîné à la fois par le moteur thermique et par au moins une des machines électriques. Dans un deuxième mode appelé mode électrique, l'arbre de roues est entraîné par au moins une des machines électriques tandis que le moteur thermique est éteint.

Pour préserver de l'usure et du grippage des pièces mécaniques de ce dispositif, tels que des pignons, des roulements et des arbres reliés entre eux à l'intérieur de l'ensemble mécanique, on recouvre ces pièces d'une légère couche d'huile. L'ensemble mécanique est ainsi généralement lubrifié dès que l'un des arbres du dispositif entre en rotation. Cette lubrification est généralement réalisée à l'aide d'une pompe à huile mécanique.

Dans les systèmes connus, la pompe à huile est reliée à la fois à l'arbre du moteur thermique et à l'arbre d'une des machines électriques. Cette liaison entre la pompe et les deux arbres est généralement réalisée par l'intermédiaire d'un mécanisme à deux roues libres. Ce mécanisme comporte un anneau entraîné et deux anneaux entraînants. Les anneaux entraînants entraînent l'anneau entraîné lorsqu'ils tournent à une vitesse supérieure à celle de l'anneau entraîné. L'anneau entraîné est susceptible de tourner librement lorsque les anneaux entraînants tournent à une vitesse inférieure à celle de l'anneau entraîné.

Plus précisément, dans les systèmes connus, un arbre de la pompe est relié à l'anneau entraîné, tandis que l'arbre du moteur et l'arbre de la machine électrique sont reliés chacun à un anneau entraînant. Ainsi, la pompe peut être entraînée à la vitesse de rotation la plus élevée des deux arbres, afin d'assurer une lubrification sur les points de fonctionnement les plus sollicitant.

Toutefois, ce type de système ne possède pas un fonctionnement aussi robuste que souhaité. En effet, dans un tel système, le dysfonctionnement d'un des éléments entraîne généralement le dysfonctionnement global du système. Par exemple, si l'anneau entraîné est endommagé, aucune des deux roues ne peut entraîner en rotation l'arbre de la pompe.

En outre, la fabrication industrielle d'un tel système peut s'avérer difficile et chère. En effet, une telle pièce est complexe dans sa structure et nécessite donc de nombreuses opérations d'usinage. Or chaque opération prend du temps et fait augmenter le prix de revient du système.

On connaît également du document EP 0 821 187 un dispositif comportant une pompe à huile dont les deux roues libres ne sont pas concentriques et présente donc un encombrement axial important.

L'invention se propose de résoudre ces problèmes de dysfonctionnement et de coût.

A cet effet, dans l'invention, le mécanisme à deux roues libres est réalisé à partir de deux appareils à roue libre à cages séparées et distinctes. Autrement dit, ces appareils à roue libre possèdent des anneaux entraînés distincts et indépendants. Ainsi, dans le cas où l'anneau entraîné d'un des appareils est endommagé, à la suite d'un choc par exemple, le deuxième appareil peut toujours fonctionner correctement, indépendamment de l'appareil endommagé.

En outre, dans l'invention, la fabrication industrielle du mécanisme peut être réalisée à bas coût, puisqu'il peut être réalisé à partir de deux appareils à roue libre identiques. Or chaque appareil est facile à réaliser indépendamment puisqu'il comporte uniquement un anneau entraînant et un anneau entraîné. Pour fabriquer l'invention, on fabrique donc en grande quantité des appareils élémentaires simples, alors que pour fabriquer le système de l'état de la technique, il était nécessaire de fabriquer des mécanismes complexes en petite quantité.

Plus précisément, dans le mécanisme selon l'invention, l'arbre du moteur et l'arbre d'une machine électrique sont reliés chacun à un anneau entraînant. Tandis que l'arbre de la pompe est relié aux deux anneaux entraînés du mécanisme.

Dans une réalisation particulière, l'arbre de la pompe est relié à l'intérieur des appareils à roue libre, tandis que l'arbre du moteur et l'arbre de la machine sont reliés à l'extérieur des appareils à roue libre. En variante, les roues libres sont situées l'une au-dessus de l'autre et l'arbre de la pompe est connecté entre les roues libres.

Dans une réalisation particulière, les appareils à roue libre comportent des galets qui entrent en coopération avec une paroi de l'anneau entraîné. Dans une position arc-boutée, ces galets entraînent en rotation l'anneau entraîné, tandis que dans une position libre, ces galets permettent la libre rotation des anneaux entraînés.

En outre, dans l'invention, la pompe à huile est reliée à des arbres du dispositif de transmission, de telle manière qu'elle assure la lubrification des pièces mécaniques du dispositif de transmission, quel que soit le mode de fonctionnement du véhicule. Ainsi, la pompe est entraînée lorsque le véhicule fonctionne en mode hybride ou en mode électrique, mais aussi lorsque le véhicule est à l'arrêt (avec une machine actionnée et/ou le moteur démarré), roule en marche arrière ou est remorqué.

L'invention concerne donc un dispositif de transmission de puissance d'un véhicule automobile muni d'un mécanisme à roues libres entraînant un arbre d'une pompe à huile, conforme à l'objet de la revendication 1.

L'invention sera mieux comprise à la lecture de la description qui suit et à l'examen des figures qui l'accompagnent. Ces figures sont données à titre illustratif mais nullement limitatif de l'invention. Ces figures montrent :
- figure 1 : une représentation schématique d'un dispositif de transmission selon l'invention comportant une pompe mécanique reliée à un arbre du moteur et à un arbre d'une des machines électriques ;
- figure 2 : une représentation schématique d'un dispositif de transmission selon l'invention comportant une pompe mécanique reliée à l'intérieur d'un ensemble mécanique formé de deux trains épicycloïdaux ;
- figures 3 : des représentations schématiques de liaisons entre un arbre de pompe, un arbre du moteur et un arbre de machine par l'intermédiaire d'un mécanisme à deux roues libres selon l'invention ;
- figures 4 : des représentations schématiques d'un appareil à roue libre selon l'invention ;
- figure 5 : une représentation schématique d'un dispositif de transmission selon l'invention dans lequel le dispositif à roue libre est positionné de manière à être entraîné, quel que soit le mode de fonctionnement du dispositif de transmission.

Les éléments identiques conservent la même référence d'une figure à l'autre.

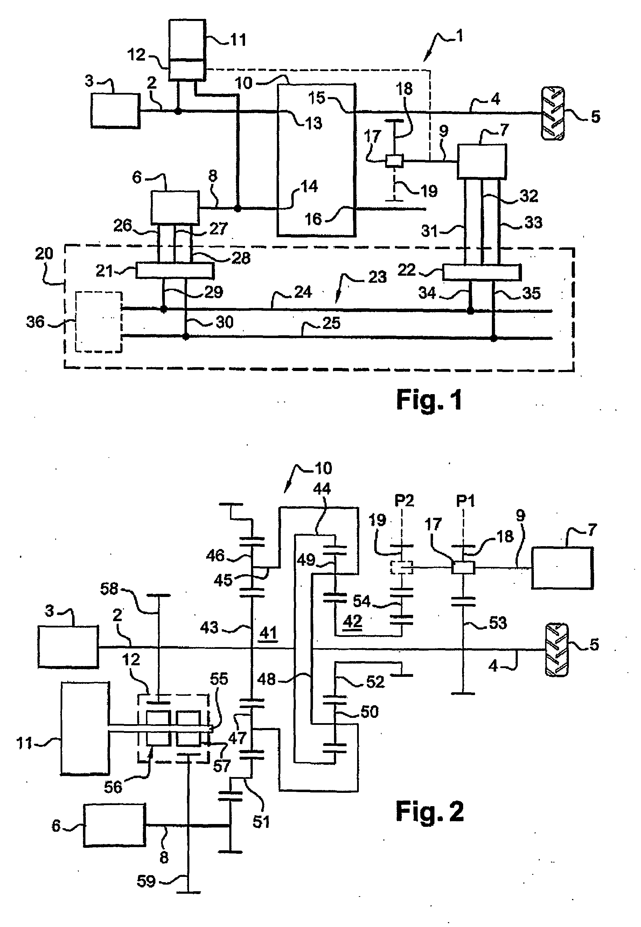

La figure 1 montre une représentation schématique d'un dispositif 1 de transmission entre un arbre 2 d'un moteur 3 thermique et un arbre 4 de roues 5. Ce dispositif 1 comporte une première machine 6 électrique et une deuxième machine 7 électrique comportant respectivement un arbre 8 et un arbre 9. L'arbre 2, l'arbre 4, l'arbre 8 et l'arbre 9 sont reliés entre eux par l'intermédiaire d'un ensemble 10 mécanique.

Une pompe 11 à huile mécanique est reliée à un arbre 2 du moteur 3 et à un des arbres 8, 9 par l'intermédiaire d'un mécanisme 12 à deux roues libres. Comme on va le voir, le dispositif 1 est susceptible de fonctionner dans deux états de fonctionnement.

Plus précisément, l'ensemble 10 mécanique comporte plusieurs trains épicycloïdaux reliés entre eux. Chaque train épicycloïdal comporte dans le cas général trois différents éléments mobiles en rotation : un planétaire, un porte-satellites et une couronne qui engrènent mutuellement. Dans l'ensemble 10, les trains épicycloïdaux sont reliés entre eux de manière à présenter deux degrés de libertés et quatre éléments mobiles externes auxquels on va relier l'arbre 2 du moteur 3, l'arbre 4 de roues 5 et les deux arbres 8 et 9 des machines 6 et 7 électriques.

Ainsi, l'arbre 2 est relié à un premier élément 13 mobile de l'ensemble 10. L'arbre 8 est relié à un deuxième élément 14 mobile de l'ensemble 10. L'arbre 4 est relié à un troisième élément 15 mobile de l'ensemble 10. L'arbre 9 est susceptible d'être relié soit au troisième élément 15 mobile en prise directe avec l'arbre 4 de roues 5, soit à un quatrième élément 16 mobile de l'ensemble 10. Cette liaison de l'arbre 9 au troisième élément 15 ou au quatrième élément 16 mobile est réalisée notamment par l'intermédiaire d'un crabot 17 et d'un premier et deuxième pignon 18 et 19.

Par ailleurs, une chaîne 20 électrique relie la première et la deuxième machine 6 et 7 entre elles. Cette chaîne 20 comporte notamment un premier onduleur 21, un deuxième onduleur 22, ainsi qu'un bus 23 électrique comportant deux connexions 24 et 25. Dans la pratique, ce bus électrique 23 est un bus à tension continue. Des phases 26-28 de la première machine 6 sont reliées au premier onduleur 21 qui est lui-même relié aux deux connexions 24 et 25 par intermédiaire de deux liaisons filaires 29 et 30. Des phases 31-33 de la deuxième machine 7 sont reliées au deuxième onduleur 22 qui est lui-même relié aux deux connexions 24 et 25 par l'intermédiaire de deux liaisons filaires 34 et 35.

En mode hybride ou en mode tout électrique, les machines 6 et 7 peuvent se comporter soit en moteur, soit en générateur. Lorsqu'une des machines 6 ou 7 se comporte en générateur, les signaux de tension alternatifs observables entre les phases 26-28 ou 31-33 sont transformés en un signal de tension continue observable sur le bus 23, par l'onduleur 21 ou 22 associé à cette machine. Lorsqu'une des machines 6 ou 7 se comporte en moteur, le signal de tension continue observable sur le bus 23 est transformé en signaux de tension alternatifs et déphasés par l'onduleur 21 ou 22 associé à cette machine. Ces signaux de tension sont appliqués sur les phases de la machine 6 ou 7 qui fonctionne en moteur.

Dans le cas où aucun système de stockage n'est relié au bus 23, l'énergie produite par une des machines est automatiquement consommée par l'autre machine. En variante, un système de stockage, tel qu'une batterie 36, est relié au bus 23. Dans une phase de récupération particulière, les deux machines 6 et 7 peuvent fonctionner simultanément ou l'une après l'autre en générateur, de manière à stocker le plus d'énergie possible dans la batterie 36. Dans une phase d'accélération particulière, les deux machines 6 et 7 peuvent fonctionner simultanément en moteur, par exemple pendant que le moteur 2 est éteint.

Dans une réalisation particulière, la pompe 11 est reliée à l'arbre 2 du moteur 3 et à l'arbre 8 de la première machine 6 par l'intermédiaire du mécanisme 12 à deux roues libres. Cette pompe 11 a pour but de lubrifier des éléments mécaniques de l'ensemble 10 mécanique, ainsi que les arbres 2, 4, 8 et 9. Cette pompe 11 est activée dès qu'un des arbres 2, 4, 8 et 9 entre en rotation. En variante, la pompe 11 est reliée à l'arbre 2 du moteur 3 et à l'arbre 9 de la machine 7. Dans une autre variante, la pompe 11 est reliée simultanément à l'arbre 2, à l'arbre 8 et à l'arbre 9 par l'intermédiaire d'un mécanisme 12 à trois roues libres.

La figure 2 montre une représentation schématique d'un dispositif 1 de transmission selon l'invention comportant un ensemble 10 mécanique formé par un premier train 41 épicycloïdal et d'un deuxième train 42 épicycloïdal. La pompe 11 est reliée dans cette réalisation à l'arbre 2 du moteur 3 et à l'arbre 8 de la première machine 6. Pour des raisons de simplicité, la chaîne électrique 20 n'est pas représentée.

Plus précisément, un planétaire 43 du premier train 41 est relié à une couronne 44 deuxième train 42. Et un porte-satellites 45 du premier train 41 portant les satellites 46 et 47 est relié à un porte-satellites 48 du deuxième train portant les satellites 49 et 50. En liant les deux trains 41 et 42 par deux liaisons, on limite les quatre degrés de liberté potentiels de l'ensemble 10 à deux et on dispose de quatre éléments mobiles accessibles.

Par ailleurs, l'arbre 2 du moteur 3 est relié au planétaire 43 du premier train 41. L'arbre 4 de roues 5 est relié au porte-satellites 48 du deuxième train 42. L'arbre 8 de la première machine 6 est relié à une couronne 51 du premier train 41.

Le crabot 17, en se déplaçant le long de l'arbre 9 de la deuxième machine 7 est susceptible de relier cet arbre 9 soit à un planétaire 52 du deuxième train 42, soit à l'arbre 4 de roues 5. Lorsqu'il se trouve dans une première position P1, le crabot 17 relie l'arbre 9 à l'arbre 4 par l'intermédiaire du pignon 18 et d'une roue 53. Le pignon 19 est alors monté fou sur l'arbre 9. Lorsqu'il se trouve dans une position P2, le crabot 17 relie l'arbre 9 au planétaire 52 par l'intermédiaire du pignon 19 et d'une roue 54. Le pignon 17 est alors monté fou sur l'arbre 9.

En outre, un arbre 55 de pompe est relié à l'arbre 2 du moteur 3 et à l'arbre 8 du moteur 6 par l'intermédiaire du mécanisme 12 à deux roues libres. Ce mécanisme 12 à deux roues libres comporte un premier appareil 56 à roue libre et un deuxième appareil 57 à roue libre distincts et indépendants. Autrement dit, lorsqu'ils ne sont pas montés à l'intérieur du dispositif 1, ces deux appareils 56 et 57 ne sont pas reliés entre eux.

Dans cette réalisation, l'arbre 2 du moteur 3 est relié au premier appareil 56 par l'intermédiaire d'une roue dentée 58. Et l'arbre 8 de la première machine 6 est relié au deuxième appareil 57 à roue libre par l'intermédiaire d'une roue dentée 59. Une description plus détaillée du mécanisme 12 est donnée dans les figures suivantes.

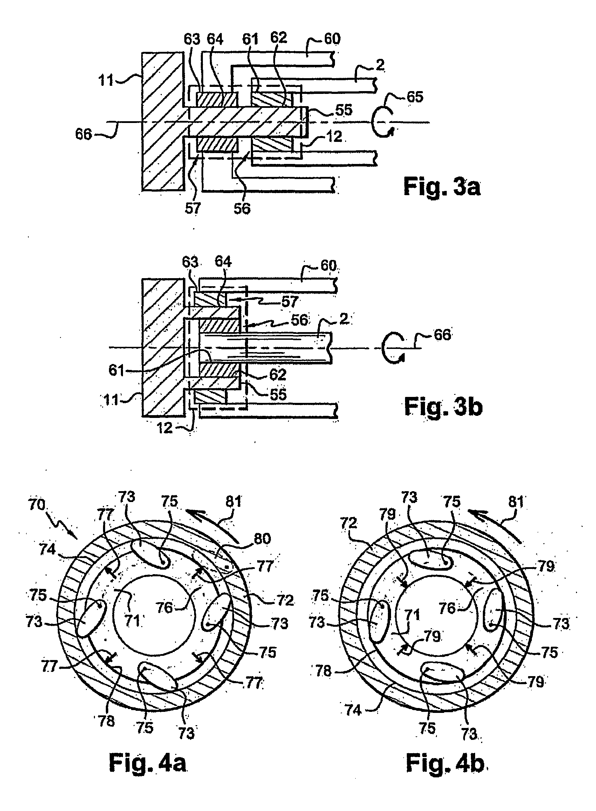

Les figures 3 montrent des représentations schématiques de liaisons entre un arbre 55 de pompe, un arbre 2 du moteur et un arbre 60 de machine par l'intermédiaire du mécanisme 12 à deux roues libres selon l'invention. L'arbre 60 de machine est indifféremment l'arbre 8 de la première machine 6 ou l'arbre 9 de la deuxième machine 7.

Dans la figure 3a, comme sur la figure précédente, le mécanisme 12 à deux roues libres comporte le premier appareil 56 à roue libre et le deuxième appareil 57 à roue libre.

Le premier appareil 56 comporte un premier anneau 61 entraînant et un premier anneau 62 entraîné. Le deuxième appareil 57 à roue libre comporte un deuxième anneau 63 entraînant et un deuxième anneau 64 entraîné. Ces quatre anneaux 61-64 sont de même diamètre et sont susceptibles de tourner dans un même sens 65 de rotation autour d'un axe 66 qui est l'axe de l'arbre 55 de pompe.

Un anneau 61, 63 entraînant entraîne un anneau 62, 64 entraîné en rotation, lorsqu'il tourne à une vitesse supérieure ou égale à celle de l'anneau 62, 64 entraîné. Un anneau 62, 64 entraîné est susceptible de tourner librement lorsqu'il tourne à une vitesse supérieure à celle d'un anneau 61, 63 entraînant.

L'arbre 55 de pompe est relié aux anneaux entraînés 62, 64. L'arbre 55 est ainsi solidaire des anneaux 62 et 64 entraînés. L'arbre 2 du moteur 3 et l'arbre 60 de machine sont respectivement reliés aux premier et deuxième anneau 61, 63 entraînant.

Ainsi, l'arbre 55 de pompe peut toujours être entraîné par l'arbre 2 ou 60 qui tourne le plus vite. En effet, lorsque l'arbre 2 tourne plus vite que l'arbre 60, l'arbre 55 de pompe est entraîné par cet arbre 2, par l'intermédiaire de l'anneau 61 entraînant. En effet, cet anneau 61 entraînant entraîne l'anneau 62 entraîné, pendant que l'anneau 64 entraîné est en roue libre et tourne librement à l'intérieur de l'anneau 63 entraînant.

Lorsque l'arbre 60 tourne plus vite que l'arbre 2, l'arbre 55 de pompe est entraîné par l'arbre 60 par l'intermédiaire de l'anneau 63 entraînant. En effet, cet anneau 63 entraînant entraîne l'anneau 64 entraîné, pendant que l'anneau 62 entraîné est en roue libre et tourne librement à l'intérieur de l'anneau 61. L'arbre 55 peut ainsi être entraîné même lorsqu'un des arbres 2 ou 60 est à l'arrêt.

En général, les deux appareils 56 et 57 à roue libre utilisés sont identiques. Il est ainsi possible d'utiliser des appareils à roue libre standards peu onéreux et facile à fabriquer.

Dans cette réalisation, les anneaux 61, 63 entraînants sont des anneaux externes des appareils 56 et 57 à roue libre, tandis que les anneaux 62, 64 entraînés sont des anneaux internes. Les anneaux externes possède un diamètre plus grand que les anneaux internes. Comme les appareils sont identiques, les anneaux 61, 63 entraînant, possèdent un même diamètre et les anneaux 62, 64 entraînés possèdent également un même diamètre. En variante, les anneaux 61, 63 sont des anneaux internes, tandis que les anneaux 62, 64 sont des anneaux externes.

Dans cette réalisation, l'arbre 2 et l'arbre 60 sont reliés directement aux appareils 56 et 57 à roue libre. L'arbre 55 de pompe est plein, tandis que l'arbre 2 et l'arbre 60 sont creux. L'arbre 60 de machine possède un diamètre plus grand que celui de l'arbre 2, de manière que l'arbre 2 puisse être monté sur l'arbre 55, à l'intérieur de l'arbre 60. Ces trois arbres 2, 55 et 60 sont coaxiaux, leur trois axes étant confondus avec l'axe 66.

En variante, l'arbre 2 est relié au deuxième appareil 57 à roue libre, et entoure l'arbre 60 qui est relié au premier appareil 56 à roue libre.

La figure 3b montre une représentation schématique d'une variante du mécanisme 12 à deux roues libres selon l'invention.

Dans cette variante, les appareils 56 et 57 à roue libre sont concentriques, l'appareil 56 se situant à l'intérieur de l'appareil 57.

Plus précisément, l'anneau 61 entraînant et l'anneau 62 entraîné du premier appareil 56 à roue libre correspondent respectivement à un anneau interne et à un anneau externe de l'appareil 56. L'anneau 63 entraînant et l'anneau 64 entraîné du deuxième appareil 57 à roue libre correspondent respectivement à un anneau externe et à un anneau interne de l'appareil 57. Dans chaque appareil, l'anneau externe possède là encore un diamètre plus grand que les anneaux internes.

L'arbre 55 de pompe est relié aux anneaux 62, 64 entraînés, tandis que les arbres 2 et 60 sont respectivement reliés aux anneaux 61 et 63 entraînants. A cet effet, l'arbre 55 de pompe et l'arbre 60 sont creux, tandis que l'arbre 2 est plein. L'arbre 55 de pompe est ainsi positionné entre l'anneau 62 entraîné du premier appareil 56 et l'anneau 64 entraîné du deuxième appareil 57. Les trois arbres 2, 55 et 60 sont là encore coaxiaux, leur axe se confondant avec l'axe 66.

En variante, l'arbre 2 est relié au deuxième appareil 57 à roue libre, tandis que l'arbre 60 est relié au premier appareil 56 à roue libre.

Les figures 4 montrent des représentations schématiques d'un appareil 70 à roue libre selon l'invention. Cet appareil 70 à roue libre comporte un anneau 71 interne qui est l'anneau entraînant, et un anneau 72 externe qui est un anneau entraîné. Les deux anneaux 71 et 72 tournent dans un même sens 81 de rotation qui correspond ici au sens trigonométrique. Cet appareil 70 correspond par exemple au premier appareil 62 de la figure 3b.

Plus précisément, l'anneau 71 entraînant comporte des galets 73 mobiles disposés sur sa périphérie 78 extérieure. Ces galets 73 sont susceptibles d'entrer en coopération avec une périphérie 74 interne de l'anneau 72 entraîné. Cette périphérie 74 est ici lisse mais en variante, elle pourrait comporter des reliefs.

Les galets 73 sont orientés dans le sens de rotation des l'anneaux 71 et 72, vers l'extérieur de l'anneau 71 interne. Chaque galet 73 est asymétrique et est susceptible de tourner autour d'un axe 75 de rotation. Cet axe 75 de rotation est excentré par rapport à un centre de gravité d'un galet.

Les galets 73 sont montés sur un ressort 76 circulaire représenté en traits pointillés. Ce ressort 76 assure un passage d'une position arc-boutée à une position libre des galets 73.

Ainsi, comme le montre la figure 4a, dans la position arc-boutée, le ressort 76 plaque les galets 73 contre la périphérie 74 interne. A cet effet, des forces 77 orientées vers l'extérieur des anneaux 71, 72 sont exercées par le ressort 76 sur les galets 73. La position arc-boutée du ressort 76 est observable lorsque l'anneau 71 tourne plus vite que l'anneau 72.

Comme le montre la figure 4b, dans la position libre, le ressort 76 plaque les galets 73 contre une périphérie 78 extérieure de l'anneau 71. A cet effet, des forces 79 orientées vers un centre des anneaux 71, 72 sont exercées par le ressort 76 sur les galets 73. La position libre du ressort 76 est observable lorsque l'anneau 72 tourne plus vite que l'anneau 71.

En variante, les galets, comme celui référencé 80, sont accrochés sur la périphérie 74 de l'anneau 72. Les galets 80 sont susceptibles de se plaquer contre la périphérie 78 extérieure de l'anneau 71. Dans cette variante, l'anneau 72 externe est l'anneau entraînant, tandis que l'anneau 71 interne est l'anneau entraîné. L'appareil 70 correspond alors aux appareils 56 et 57 de la figure 3a et à l'appareil 57 de la figure 3b.

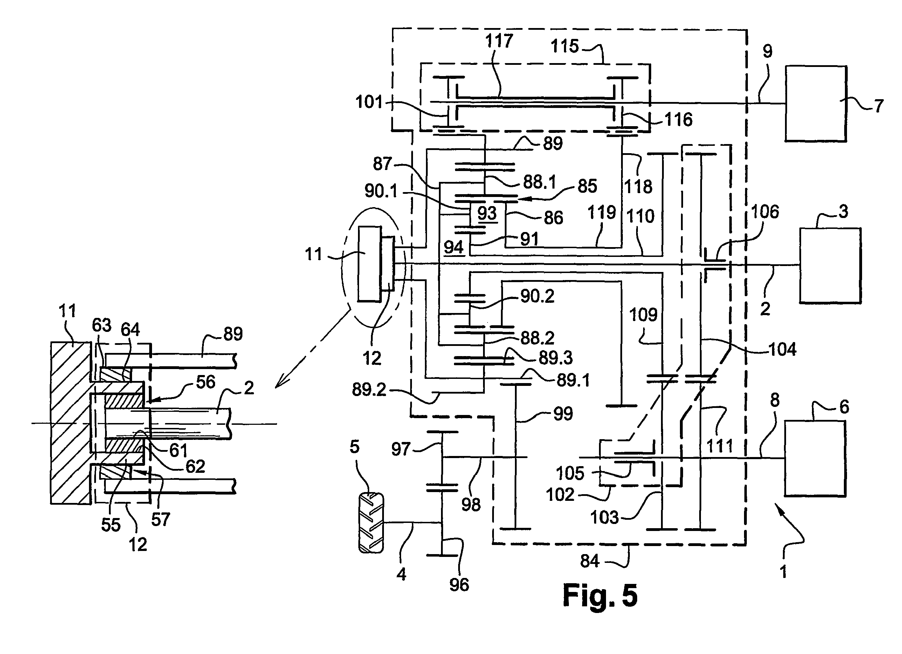

La figure 5 montre une représentation schématique d'un dispositif 1 de transmission selon l'invention dans laquelle la pompe 11 est entraînée quel que soit le mode de fonctionnement du véhicule.

Dans cette réalisation, l'ensemble 84 mécanique comporte un train 85 dit de type Ravigneaux. Ce train 85 présente deux degrés de liberté en rotation et quatre éléments de liaisons mécaniques : un pour l'arbre 2 du moteur 3, un autre pour l'arbre 4 de roues 5 et les deux autres pour les arbres 8 et 9 des machines 6 et 7.

Comme un train épicycloïdal classique, ce train 85 comporte un premier planétaire 86, un porte-satellites 87 portant des premiers satellites 88.1 et 88.2, et une couronne 89 qui engrènent mutuellement. En outre, le train 85 comporte des deuxièmes satellites 90.1 et 90.2, et un deuxième planétaire 91. Les deuxièmes satellites 90.1 et 90.2 sont portés par le porte-satellites 87 et engrènent à la fois avec les premiers satellites 88.1 et 88.2 et avec le planétaire 91.

On peut ainsi faire l'analogie entre le train 85 Ravigneaux et deux trains 93 et 94 épicycloïdaux. Le premier train 93 comporte le premier planétaire 86, les premiers satellites 88.1 et 88.2 et la couronne 89. Le deuxième train 94 comporte le deuxième planétaire 91 et les deuxièmes satellites 90.1 et 90.2, mais est dépourvu de couronne. Ces deux trains 93 et 94 comportent le porte-satellites 87 commun. Ce porte-satellites 87 entraîne des axes qui sont à la fois au contact de ce porte-satellites 87 et des satellites 88.1, 88.2, 90.1 et 90.2. En variante, les satellites 88.1 et 90.1, et les satellites 88.2 et 90.2 sont solidaires entre eux et coaxiaux.

Dans cette réalisation, l'arbre 2 du moteur 3 thermique est relié au porte-satellites 87 commun. L'arbre 4 de roues 5 est relié à la couronne 89 par l'intermédiaire d'un d'engrenage formé par les roues 96 et 97, de l'arbre 98 et d'une roue 99.

La couronne 89 supporte à cet effet deux dentures extérieures 89.1 et 89.2, et une denture intérieure 89.3. La roue 99 engrène avec la denture extérieure 89.1. Les premiers satellites 88.1 et 88.2 engrènent avec la denture intérieure 89.3. Et comme on le verra ci-après, un pignon 101 engrène avec la denture extérieure 89.2.

L'arbre 8 de la première machine 6 est susceptible d'être relié soit au deuxième planétaire 91, soit à l'arbre 2 du moteur 3. A cet effet, le dispositif 1 de transmission comporte un premier dispositif 102 de commutation délimité par une ligne fermée discontinue. Ce dispositif 102 comporte des pignons 103 et 104 et deux crabots 105, 106 distincts. Le pignon 103 et le crabot 105 sont montés sur l'arbre 8, tandis que le pignon 104 et le crabot 106 sont montés sur l'arbre 2 du moteur.

Ainsi, lorsque l'arbre 8 est relié au deuxième planétaire 91, le crabot 105 assure une liaison entre le pignon 103 et l'arbre 8, tandis que le pignon 104 est monté fou sur l'arbre 2. L'arbre 8 est alors relié au deuxième planétaire 91 par l'intermédiaire d'un engrenage formé par le pignon 103 et la roue 109, et d'un arbre 110 creux reliant la roue 109 au planétaire 91. Lorsque l'arbre 8 est relié à l'arbre 2 du moteur, le crabot 106 assure une liaison entre le pignon 104 et l'arbre 2, tandis que le pignon 103 est monté fou sur l'arbre 8. L'arbre 8 est ainsi relié à l'arbre 2 par l'intermédiaire d'un engrenage formé par la roue 111 et le pignon 104.

L'arbre 9 de la deuxième machine 7 est susceptible d'être relié soit à l'arbre 4 de roues 5, soit au premier planétaire 86. A cet effet, le dispositif 1 comporte un deuxième dispositif 115 de commutation. Ce dispositif 115 comporte les pignons 101, 116, ainsi qu'un crabot 117 monobloc.

Lorsque l'arbre 9 est relié à l'arbre 4 de roues 5, le crabot 117 assure une liaison entre le pignon 101 et l'arbre 9, tandis que le pignon 116 est monté fou sur l'arbre 9. L'arbre 9 est alors relié à l'arbre 4 par l'intermédiaire notamment du pignon 101, de la couronne 89 et de l'arbre 98. Lorsque l'arbre 9 est relié au premier planétaire 86, le crabot 117 assure une liaison entre le pignon 116 et l'arbre 9, tandis que le pignon 101 est monté fou sur l'arbre 9. L'arbre 9 est alors relié au premier planétaire 86 par l'intermédiaire d'un engrenage formé par le pignon 116 et la roue 118, et d'un arbre 119 creux reliant la roue 118 au planétaire 86.

Dans cette réalisation, la liaison entre la pompe à huile 11 et le dispositif de transmission est telle qu'elle permet l'entraînement de la pompe dans tous les modes de fonctionnement du véhicule.

A cet effet, la pompe 11 est positionnée à l'extrémité de l'arbre 2, après le porte-satellites 18 commun, et est reliée à l'arbre 2 du moteur et à la couronne 89 par l'intermédiaire du mécanisme 12 à roue libre. Ce mécanisme 12 à roue libre est ici du même type que celui de la figure 3b. Ainsi, l'arbre de machine 9 est relié à la pompe 11 par l'intermédiaire de la couronne 89 du train 85, cette couronne 89 étant en prise directe avec l'appareil 57 à roue libre accroché à l'arbre 55 de la pompe. En outre, une extrémité de l'arbre 2 est en prise directe avec l'appareil 56 à roue libre accroché à l'arbre 55 de la pompe à huile.

Plus précisément, l'arbre 55 de pompe étant creux, la roue libre 56 est positionnée entre une face interne de cet arbre 55 et une face externe de l'arbre 2 du moteur qui est un arbre plein. L'arbre 2 du moteur est relié à l'anneau entraînant 61, tandis que l'arbre 55 de pompe est relié à l'anneau entraîné 62 de la roue libre 56.

En outre, la roue libre 57 est positionnée entre une face externe de l'arbre 55 et une face interne de l'arbre creux de la couronne 89. La couronne 89 est reliée à l'anneau entraînant 63, tandis que l'arbre 55 de pompe est relié à l'anneau entraîné 64 de la roue libre 57.

Les appareils à roue libre 56 et 57 sont concentriques. En outre, les axes des arbres 2 et 55 et l'axe de la couronne 89 sont confondus.

Ainsi, dans un fonctionnement hybride du véhicule, la pompe 11 est entraînée par le moteur 3 ou par une des machines électriques ou par les roues reliées à la couronne 89. Dans un fonctionnement électrique du véhicule, la pompe 11 est entraînée par une des machines électriques 6, 7 ou par les roues 5 reliées à la couronne 89. Dans un fonctionnement thermique, la pompe 11 est entraînée par l'arbre 2 du moteur 3 ou par les roues reliées à la couronne 89. Lorsque le véhicule est à l'arrêt, une machine 6, 7 étant actionnée et/ou le moteur 3 étant démarré, la pompe 11 est entraînée par cette machine 6, 7 et/ou le moteur 3. Lorsque le véhicule est remorqué, la pompe 11 est alors entraînée par les roues 5 du véhicule.

En variante, l'invention est mise en oeuvre dans des véhicules hybrides comportant un moteur et une machine électrique reliés entre eux par l'intermédiaire d'un embrayage.

En variante, l'invention est mise en oeuvre avec une pompe à eau du véhicule.

## Revendications

1. Dispositif (1) de transmission de puissance d'un véhicule automobile muni d'un mécanisme (12) à roues libres entraînant un arbre d'une pompe (11) à huile, ce dispositif (1) de transmission étant disposé entre un arbre (2) d'un moteur (3) thermique et un arbre (4) de roues (5), ce dispositif (1) comportant :
- au moins deux machines électriques (6, 7) comportant chacune un arbre (8, 9) de machine, et
- un ensemble (84) mécanique comportant un train de type Ravigneaux, reliant entre eux l'arbre (2) du moteur (3), chaque arbre (8, 9) des machines et l'arbre (4) de roues (5),
- l'arbre (2) du moteur (3) et chaque arbre (8, 9) des machines étant reliés à l'arbre (55) de pompe par l'intermédiaire du mécanisme (12) à roue libre, ce mécanisme (12) comportant deux appareils (56, 57) à roue libre distincts et indépendants l'un de l'autre,
- les deux appareils (56, 57) à roue libre étant de forme annulaire et concentriques l'un par rapport à l'autre,
- l'arbre (55) de pompe, et l'arbre (2) du moteur étant concentriques ; un élément (89) de l'ensemble mécanique (84) correspondant à la couronne (89) du train Ravigneaux étant couplé mécaniquement à la pompe (11) et en permanence aux roues (5), lesdites roues pouvant être entraînées soit par le moteur (2) et/ou par l'une ou l'autre ou les deux machines (6, 7),
- l'arbre (9) de la machine (7) est relié à la pompe (11) à huile par l'intermédiaire de la couronne (89) du train Ravigneaux,
- ladite couronne (89) étant en prise directe avec un appareil à roue libre accroché à l'arbre (55) de la pompe, et étant entraîné en rotation lorsque l'arbre (4) de roues (5) tourne.

2. Dispositif selon la revendication 1, dans lequel :
- la pompe (11) à huile est entraînée lorsque le véhicule fonctionne en mode hybride ou en mode électrique, mais aussi lorsque le véhicule est à l'arrêt avec le moteur démarré et/ou une machine actionnée, ou lorsque le véhicule roule en marche arrière, ou est remorqué.

3. Dispositif selon l'une des revendications 1 ou 2, dans lequel :
- le mécanisme (12) à roue libre est positionné à une extrémité de l'arbre (2) du moteur (3),
- une extrémité de l'arbre (2) du moteur (3) étant en prise directe avec un appareil à roue libre accroché à l'arbre (55) de la pompe à huile.

4. Dispositif selon l'une des revendications 1 à 3, dans lequel :
- l'élément (89) de l'ensemble mécanique (84) de machine et l'arbre (55) de pompe sont concentriques.

5. Dispositif selon l'une des revendications 1 à 4, dans lequel :
- les deux appareils (56, 57) à roue libre comportent respectivement un premier et un deuxième anneau (61, 63) entraînant, et un premier et un deuxième anneau entraîné (62, 64),
- un anneau (61, 63) entraînant entraîne un anneau (62, 64) entraîné en rotation lorsqu'il tourne à une vitesse supérieure ou égale à celle de l'anneau entraîné,
- un anneau (62, 64) entraîné étant susceptible de tourner librement à l'intérieur de l'anneau (61, 63) entraînant lorsqu'il tourne à une vitesse supérieure à celle de cet anneau (61, 63) entraînant,
- l'arbre (55) de pompe étant relié aux anneaux (62, 64) entraînés, l'arbre (2) du moteur (3) et l'arbre (8, 9) de machine étant respectivement reliés au premier et deuxième anneau (61, 63) entraînant.

6. Dispositif selon la revendication 5, dans lequel :
- l'anneau (61) entraînant et l'anneau (62) entraîné d'un des deux appareils (56) roue libre correspondent respectivement à un anneau interne et à un anneau externe de cet appareil (56), tandis que l'anneau (63) entraînant et l'anneau (64) entraîné de l'autre appareil (57) correspondent respectivement à un anneau externe et à un anneau interne, les anneaux externes possédant un diamètre plus grand que les anneaux internes.

7. Dispositif selon l'une des revendications 5 ou 6, dans lequel :
- les anneaux (61, 63) entraînants comportent des galets (73, 80) mobiles disposés sur une de leur périphérie (78), ces galets (73) entrant en coopération avec une périphérie (74) des anneaux (62, 64) entraînés, ces galets (73, 80) étant orientés dans le sens (81) de rotation des anneaux (61, 63) entraînants.

8. Dispositif selon la revendication 7, dans lequel :
- les galets (73, 80) sont montés sur un ressort (76) circulaire, ce ressort (76) assurant un passage d'une position arc-boutée à une position libre des galets (73, 80), ces galets (73, 80) comportant un axe (75) excentré par rapport à leur centre de gravité.

## Claims

1. Power transmission device (1) of an automobile vehicle provided with a freewheel mechanism (12) driving a shaft of an oil pump (11), this transmission device (1) being disposed between a shaft (2) of a heat engine (3) and a shaft (4) of wheels (5), this device (1) comprising:
- at least two electrical machines (6, 7) each comprising a machine shaft (8, 9), and
- a mechanical assembly (84) comprising a train of the Ravigneaux type, connecting the shaft (2) of the engine (3), each shaft (8, 9) of the machines and the shaft (4) of wheels (5) to one another,
- the shaft (2) of the engine (3) and each shaft (8, 9) of the machines being connected to the pump shaft (55) via the freewheel mechanism (12), this mechanism (12) comprising two distinct freewheel units (56, 57) independent of one another,
- the two freewheel units (56, 57) being ringshaped and concentric one with respect to the other,
- the pump shaft (55) and the shaft (2) of the engine being concentric;
an element (89) of the mechanical assembly (84) corresponding to the crown (89) of the Ravigneaux train being coupled mechanically to the pump (11) and permanently to the wheels (5), the said wheels being able to be driven either by the engine (2) and/or by one or other or the two machines (6, 7),
- the shaft (9) of the machine (7) is connected to the oil pump (11) via the crown (89) of the Ravigneaux train,
- the said crown (89) being engaged directly with a freewheel unit attached to the shaft (55) of the pump, and being driven in rotation when the shaft (4) of wheels (5) turns.

2. Device according to Claim 1, in which:
- the oil pump (11) is driven when the vehicle is operating in hybrid mode or in electrical mode, but also when the vehicle is stopped with the engine running and/or with a machine actuated, or when the vehicle is moving in reverse, or is being towed.

3. Device according to one of Claims 1 or 2, in which:
- the freewheel mechanism (12) is positioned at an end of the shaft (2) of the engine (3),
- an end of the shaft (2) of the engine (3) being directly engaged with a freewheel unit attached to the shaft (55) of the oil pump.

4. Device according to one of Claims 1 to 3, in which:
- the element (89) of the mechanical machine assembly (84) and the pump shaft (55) are concentric.

5. Device according to one of Claims 1 to 4, in which:
- the two freewheel units (56, 57) comprise respectively a first and a second driving ring (61, 63), and a first and a second driven ring (62, 64),
- a driving ring (61, 63) drives a driven ring (62, 64) in rotation when it turns at a speed greater than or equal to that of the driven ring,
- a driven ring (62, 64) being capable of turning freely inside the driving ring (61, 63) when it turns at a speed greater than that of this driving ring (61, 63),
- the pump shaft (55) being connected to the driven rings (62, 64), the shaft (2) of the engine (3) and the machine shaft (8, 9) being respectively connected to the first and second driving ring (61, 63).

6. Device according to Claim 5, in which:
- the driving ring (61) and the driven ring (62) of one of the two freewheel units (56) correspond respectively to an internal ring and to an external ring of this unit (56), whilst the driving ring (63) and the driven ring (64) of the other unit (57) correspond respectively to an external ring and to an internal ring, the external rings having a larger diameter than the internal rings.

7. Device according to one of Claims 5 or 6, in which:
- the driving rings (61, 63) comprise movable rollers (73, 80) disposed on one of their peripheries (78), these rollers (73) cooperating with a periphery (74) of the driven rings (62, 64), these rollers (73, 80) being oriented in the direction (81) of rotation of the driving rings (61, 63).

8. Device according to Claim 7, in which:
- the rollers (73, 80) are mounted on a circular spring (76), this spring (76) ensuring a passage from a braced position to a free position of the rollers (73, 80), these rollers (73, 80) comprising an eccentric axis (75) with respect to their centre of gravity.

## Patentansprüche

1. Vorrichtung (1) zum Leistungsübertragen eines Kraftfahrzeugs, die mit einem Mechanismus (12) mit freien Rädern versehen ist, der eine Welle einer Ölpumpe (11) antreibt, wobei diese Übertragungsvorrichtung (1) zwischen einer Welle (2) eines Verbrennungsmotors (3) und einer Welle (4) von Rädern (5) angeordnet ist, wobei diese Vorrichtung (1) Folgendes aufweist:
- mindestens zwei Elektromaschinen (6, 7), die jeweils eine Maschinenwelle (8, 9) aufweisen, und
- eine mechanische Einheit (84), die ein Getriebe des Typs Ravigneaux-Getriebe aufweist, das die Welle (2) des Motors (3), jede Welle (8, 9) der Maschinen und die Welle (4) der Räder (5) verbindet,
- wobei die Welle (2) des Motors (3) und jede Welle (8, 9) der Maschinen mit der Pumpenwelle (55) über den Mechanismus (12) mit freiem Rad verbunden ist, wobei dieser Mechanismus (12) zwei separate und voneinander unabhängige Geräte (56, 57) mit freiem Rad aufweist,
- wobei die zwei Geräte (56, 57) mit freiem Rad ringförmig und zueinander konzentrisch sind,
- wobei die Pumpenwelle (55) und die Welle (2) des Motors konzentrisch sind; wobei ein Element (89) der mechanischen Einheit (84), das dem Kranz (89) des Ravigneaux-Getriebes entspricht, mechanisch mit der Pumpe (11) und ständig mit den Rädern (5) gekoppelt ist, wobei die Räder entweder von dem Motor (2) und/oder von der einen oder anderen oder beiden Maschinen (6, 7) angetrieben werden können,
- wobei die Welle (9) der Maschine (7) mit der Ölpumpe (11) über den Kranz (89) des Ravigneaux-Getriebes verbunden ist,
- wobei der Kranz (89) in direktem Eingriff mit einem Gerät mit freiem Rad ist, das an der Welle (55) der Pumpe angehängt und in Drehung angetrieben wird, wenn die Welle (4) von Rädern (5) dreht.

2. Vorrichtung nach Anspruch 1, bei der:
- die Ölpumpe (11) angetrieben wird, wenn das Fahrzeug im hybriden Modus oder im elektrischen Modus funktioniert, aber auch, wenn das Fahrzeug mit gestartetem Motor und/oder einer betätigten Maschine stillsteht, oder wenn das Fahrzeug im Rückwärtsgang fährt oder geschleppt wird.

3. Vorrichtung nach einem der Ansprüche 1 oder 2, bei der:
- der Mechanismus (12) mit freiem Rad an einem Ende der Welle (2) des Motors (3) positioniert ist,
- ein Ende der Welle (2) des Motors (3) in direktem Eingriff mit einem Gerät mit freiem Rad ist, das an der Welle (55) der Ölpumpe angehängt ist.

4. Vorrichtung nach einem der Ansprüche 1 bis 3, bei der:
- das Element (89) der mechanischen Maschineneinheit (84) und die Pumpenwelle (55) konzentrisch sind.

5. Vorrichtung nach einem der Ansprüche 1 bis 4, bei der:
- die zwei Geräte (56, 57) mit freiem Rad jeweils einen ersten und einen zweiten Antriebsring (61, 63) aufweisen, und einen ersten und einen zweiten angetriebenen Ring (62, 64) aufweisen,
- wobei Antriebsring (61, 63) einen angetriebenen Ring (62, 64) in Drehung antreibt, wenn er mit einer Geschwindigkeit dreht, die größer oder gleich der des angetriebenen Rings ist,
- ein angetriebener Ring (62, 64) frei im Inneren des Antriebsrings (61, 63) drehen kann, wenn er mit einer Geschwindigkeit dreht, die größer ist als die dieses Antriebsrings (61, 63),
- wobei die Pumpenwelle (55) mit den angetriebenen Ringen (62, 64) verbunden ist, wobei die Welle (2) des Motors (3) und die Maschinenwelle (8, 9) jeweils mit dem ersten und dem zweiten Antriebsring (61, 63) verbunden sind.

6. Vorrichtung nach Anspruch 5, bei der:
- der Antriebsring (61) und der angetriebene Ring (62) eines der zwei Geräte (56) mit freiem Rad jeweils einem Innenring und einem Außenring dieses Geräts (56) entsprechen, während der Antriebsring (63) und der angetriebene Ring (64) des anderen Geräts (57) jeweils einem Außenring und einem Innenring entsprechen, wobei die Außenringe einen größeren Durchmesser besitzen als die Innenringe.

7. Vorrichtung nach einem der Ansprüche 5 oder 6, bei der:
- die Antriebsringe (61, 63) bewegliche Walzen (73, 80) aufweisen, die auf einem ihrer Umfänge (78) angeordnet sind, wobei diese Walzen (73) mit einem Umfang (74) der angetriebenen Ringe (62, 64) in Zusammenwirkung treten, wobei diese Walzen (73, 80) in die Drehrichtung (81) der Antriebsringe (61, 63) ausgerichtet sind.

8. Vorrichtung nach Anspruch 7, bei der:
- die Walzen (73, 80) auf eine kreisförmige Feder (76) montiert sind, wobei diese Feder (76) einen Übergang von einer gewölbten Position zu einer freien Position der Walzen (73, 80) sicherstellt, wobei diese Walzen (73, 80) eine Achse (75) aufweisen, die in Bezug zu ihrem Schwerpunkt außermittig ist.
